# EUROPEAN PATENT APPLICATION

(11) **EP 4 600 933 A1**
(43) Date of publication of application: **13.08.2025**
(21) Application number: 25156299.7
(22) Date of filing: 06.02.2025
(51) Int. Cl.: G08G 1/01, G06N 20/20, H04W 24/02

(54) **REAL-TIME DISTRIBUTED META LEARNING**

(30) Priority: 12.02.2024 FI 20245140
(71) Applicant: Nokia Solutions and Networks Oy, 02610 Espoo (FI)
(72) Inventor: ENRICI, Andrea, Bourg la Reine (FR)
(74) Representative: Nokia EPO representatives

(57) **Abstract**

According to an aspect, there is provided an apparatus for performing the following. The apparatus obtains alternative predicted values of a traffic metric of cooperative intelligent transport system from base learners and corresponding one or more realized values. The apparatus builds a weighted correlation graph describing correlations between the base learners based on the alternative predicted and realized values. Nodes of the weighted correlation graph correspond to the base learners and are associated with first weights defined based on values of a pre-defined error metric defined based on the alternative predicted and realized values. Edges in the weighted correlation graph are associated with second weights defined based on values of a correlation coefficient calculated for arrival times of the alternative predicted values. The apparatus calculates a maximum clique based on the weighted correlation graph and causes adaptation of amount of network resources available to the base learners based thereon.

## Description

### TECHNICAL FIELD

Various example embodiments relate to wireless communications.

### BACKGROUND

A cooperative intelligent transport system (C-ITS) is a transport system comprising two or more C-ITS stations (comprising, e.g., personal, vehicle, roadside and/or central sub-systems) which co-operate with each other so as to enable and provide an intelligent transport system (ITS) service that offers better quality and an enhanced service level compared to the same ITS service provided by only one of the ITS sub-systems. Many C-ITS use cases such as controlling a self-driving car or variable speed limits are based on performing predictions (namely, time series forecasting) regarding the traffic situation. Often, low-latency is required for such predictions. The predicted value should be available before the actual value is produced by the system under study (e.g., an ensemble of vehicles). This low-latency requirement limits the use of distributed ensemble learning in connection with C-ITS applications. Namely, in distributed ensemble learning, multiple base learners, first, have to independently make their predictions (which may take varying amounts of time). Only after all the base learner predictions have been made, a meta learner is able to make the final prediction based on those base learner predictions.

### SUMMARY

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

### BRIEF DESCRIPTION OF THE DRAWINGS

Figure 1 illustrates a system to which some embodiments may be applied;
Figure 2 illustrates basic operating principle of ensemble learning approach used in some embodiments;
Figure 3 illustrates a system according to some embodiments
Figures 4 and 5 illustrate processes according to some embodiments;
Figures 6A and 6B illustrate an example of a weighted correlation graph and a corresponding planar maximally filtered graph with the maximum clique highlighted, respectively;
Figures 7 and 8 illustrate processes according to some embodiments; and
Figure 9 illustrates an apparatus according to some embodiments.

### DETAILED DESCRIPTION OF SOME EMBODIMENTS

The following embodiments are only presented as examples. Although the specification may refer to "an", "one", or "some" embodiment(s) and/or example(s) in several locations of the text, this does not necessarily mean that each reference is made to the same embodiment(s) or example(s), or that a particular feature only applies to a single embodiment and/or example. Single features of different embodiments and/or examples may also be combined to provide other embodiments and/or examples.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

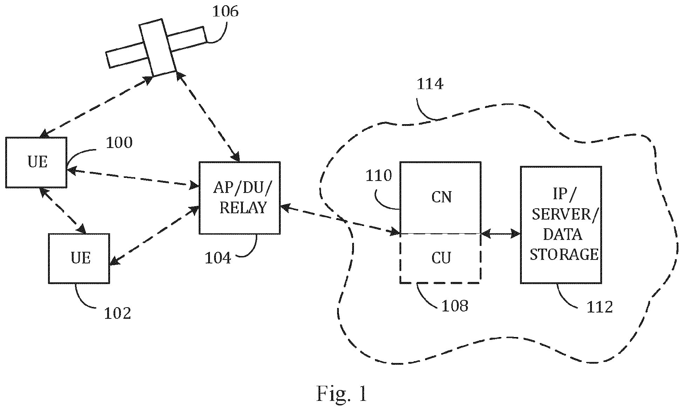

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties.

The example of Figure 1 shows a part of an exemplifying radio access network.

A communications system typically comprises more than one (e/g)NodeB 104 in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point (AP) or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

The user device 100, 102 (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station. The user equipment may comprise a mobile equipment and at least one universal integrated circuit card (UICC).

The user device 100, 102 typically refers to a portable computing device that includes wireless mobile communication devices operating with or without a subscriber identification module (SIM) or UICC, including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. Thus, the user devices may not enable direct user interaction or may enable only limited user interaction (e.g., during setup). The user device (or in some embodiments a layer 3 relay node) is configured to perform one or more of user equipment functionalities. The user device may also be called a terminal device, a subscriber unit, mobile station, remote terminal, access terminal, user terminal or user equipment (UE) just to mention but a few names or apparatuses. The user device may comprise one or more antennas.

Various techniques described herein may also be applied to a cyber-physical system (CPS) (a system of collaborating computational elements con-trolling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and also being integradable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Figure 1 by "cloud" 114). The communication system may also comprise a central control entity, or a like, providing facilities for networks of different operators to cooperate for example in spectrum sharing.

Edge cloud may be brought into the RAN by utilizing network function virtualization (NVF) and software defined networking (SDN). Using edge cloud may mean access node operations to be carried out, at least partly, in a server, host or node operationally coupled to a remote radio head or unit (RU) or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a central or centralized unit, CU 108). Thus, in summary, the RAN may comprise at least one distributed access node comprising a central unit, one or more distributed units communicatively connected to the central unit and one or more (remote) radio heads or units, each of which is communicatively connected to at least one of the one or more distributed units.

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future rail-way/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 106 in the mega-constellation may cover several satellite-enabled network entities that create on-ground cells. The on-ground cells may be created through an on-ground relay node 104 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

6G architecture is targeted to enable easy integration of everything, such as a network of networks, joint communication and sensing, non-terrestrial networks and terrestrial communication. 6G systems are envisioned to encompass machine learning algorithms as well as local and distributed computing capabilities, where virtualized network functions can be distributed over core and edge computing resources. Far edge computing, where computing resources are pushed to the very edge of the network, will be part of the distributed computing environment, for example in "zero-delay" scenarios. 5G systems may also employ such capabilities. More generally, the actual (radio) communication system is envisaged to be comprised of one or more computer programs executed within a programmable infrastructure, such as general-purpose computing entities (servers, processors, and like).

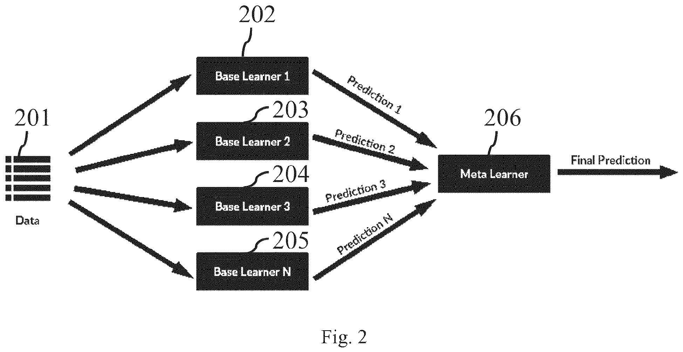

The embodiments to be discussed below are based on using an ensemble learning approach for time series forecasting. To provide context for the following discussion of embodiments, the ensemble learning approach and its benefits is discussed, in the following, in connection with Figure 2 in a general sense

To date, most existing machine learning approaches and solutions for communication networks centralize the training and inference processes to a single data center or server or cloud. In other words, typically the collected data is sent to a center server which analyzes the collected data and sends the results of the analysis back to the actuators (i.e., devices acting based on the results of the analysis). However, due to constraints on limited communication (or network) resources for data transmissions in networks, it is impractical for all communication devices that are engaged in learning to transmit all of their collected data to a data center or a cloud that can subsequently use a centralized learning algorithm for data analysis. Centralized machine learning approaches have inherent disadvantages that limit their practicality, such as signaling overhead, implementation complexity and high latency in dealing with communication problems. Such centralized approaches will not be suitable for many future low latency applications, such as controlling a self-driving car or sending instructions to a robotic surgeon.

To overcome some of said limitation of centralized machine learning approaches, so-called ensemble learning approach may be employed. Ensemble learning is a machine learning technique that involves combining the predictions of multiple machine-learning models (so-called base learners) to form a more accurate final prediction. The basic idea behind ensemble learning is that combining the strengths of multiple models can compensate for the weaknesses of individual models, leading to a more robust and reliable prediction. In connection with embodiments, the ensemble learning is used specifically for time series prediction, that is, for estimating how a sequence of observations continues into the future.

The basic principle of ensemble learning is illustrated in Figure 2. Namely, Figure 2 shows *N* base learners 202 to 205 configured to receive certain input data 201 which defines features (i.e., inputs) of the machine-learning models of the base learners. Here, *N* may be any integer larger than one. Each of the base learners 202 to 205 may employ a different machine-learning model or algorithm (sometimes called base method or algorithm) for predicting (future) values of the same metric (e.g., traffic density). Each of the base learners 202 to 205 may employ a different type of machine-learning model or algorithm (e.g., one or more different types of neural networks). Alternatively, at least some of the base learners 202 to 205 may employ machine-learning models or algorithms of the same type though with different model parameters. Some examples of machine-learning models usable by different base learners in embodiments comprise: graph multi-attention network (GMAN), Graph WaveNet, diffusion convolutional recurrent neural network (DCRNN), attention based spatial-temporal graph convolutional network (ASTGCN), spatial-temporal synchronous graph convolutional network (STSGCN) and spatio-temporal graph convolutional network (STGCN). Each base learner 202 to 205 provides its own predicted value of the metric (i.e., its own prediction) using its own machine-learning model. These predicted values 1 to *N* are inputted into a meta learner 206 which forms a final predicted value of the metric (i.e., a final prediction) based on said predicted values 1 to N. Typically, the meta learner compares the received predictions and selects one of them as the final prediction.

An ideal, real-time selection function for a meta learner 206 should select as final prediction a base learner prediction that has the highest prediction accuracy (i.e., lowest prediction error) and that respects the prediction time limit (equally called a prediction deadline). At the same time, the meta learner 206 should be able to tolerate random delays in the arrival times of accurate base learner predictions that are due, e.g., to networking delays at the locations of the base learners. This would allow the selection function to adapt to dynamic changes in the network (e.g., C-ITS network). Thus, "past losers" (unfortunate base learners producing high accuracy predictions whose predictions were delayed by the network) have a chance to become "future winners" (to be selected for the next final prediction).

In the context of low-latency applications (e.g., controlling a self-driving car or variable speed limit) where the ensemble learning is used specifically for time series prediction, the predicted value that is produced by a given machine-learning model (i.e., a time series forecasting algorithm) of a base learner must be provided within a certain pre-defined prediction time limit. The pre-defined prediction time limit should be defined so that the prediction is obtained before (preferably, much before) the actual realized value is observed or measured. This prediction time limit limits the use of distributed ensemble learning. Using a large number of base learners increases the chance that at least one of them will take too long a time to produce and output it to the meta learner. As the meta learner should wait to receive the predictions from all base learners prior to comparing them and selecting the final prediction, using a large number of base learners can significantly increase latency. Here, the latency per base learner is essentially comprised of two different factors: 1) the inference or processing time of a base learner and 2) the time it takes for a given base learner prediction to travel from a base learner to the meta learner.

The embodiments to be discussed solve or at least alleviate the aforementioned problem regarding latency in distributed ensemble learning for time series prediction.

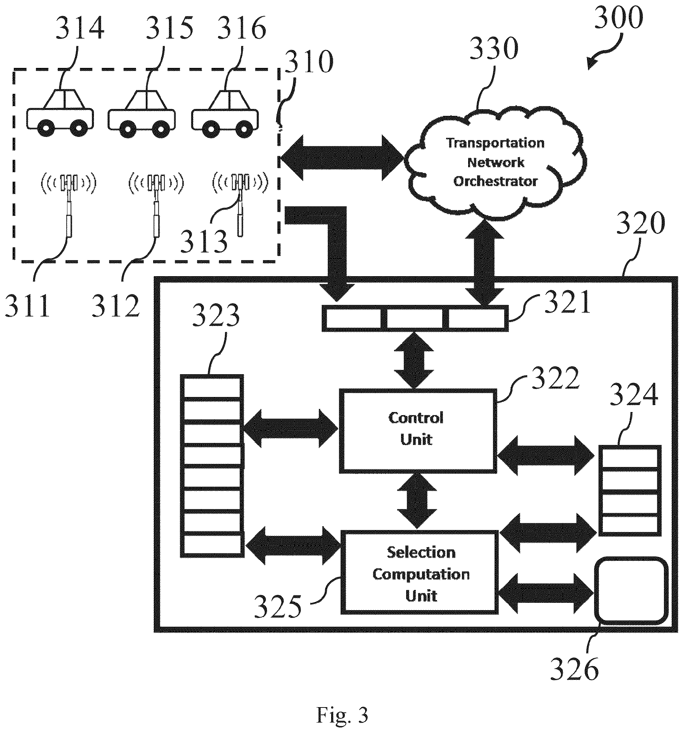

Figure 3 illustrates an architecture of a system 300 according to embodiments. Figure 3 illustrates a simplified system architecture only showing some elements and functional entities. It is apparent to a person skilled in the art that the system may also comprise other functions and structures.

The system 300 corresponds to a co-operative intelligent transport system (C-ITS). The system 300 of Figure 3 comprises a C-ITS wireless communication network 310, a traffic prediction system 320 and a transportation network orchestrator 330 (equally called simply a network orchestrator or C-ITS network orchestrator).

The C-ITS wireless communication network (or system) 310 comprises a plurality of roadside units (RSUs) 311 to 313 and a plurality of vehicular C-ITS stations 314 to 316 (i.e., smart vehicles such as cars supporting C-ITS) distributed in a transport (or specifically road) environment. An RSU may be equally called a roadside C-ITS station. A C-ITS station may be defined, in general, as a set of hardware and software components for (or configured to) collect, store, process, receive and transmit secured and trusted messages in order to enable the provision of a C-ITS service. Namely, said plurality of C-ITS stations 311 to 316 co-operate with each other so as to enable and provide an ITS service that offers better quality and an enhanced service level compared to the same ITS service provided by only one of the ITS sub-systems. Thus, at least some of the plurality of RSUs 311 to 313 may be (wirelessly) communicatively connected to each other, and each of the plurality of RSUs 311 to 313 may also be (wirelessly) communicatively connected to any vehicular C-ITS stations 314 to 316 within their coverage area. Additionally or alternatively, each of the plurality of vehicular C-ITS stations 314 to 316 may be (wirelessly) communicatively connected to any vehicular C-ITS stations within their coverage area. It should be noted that the road environment of the C-ITS stations 311 to 316 may comprise, in addition to the C-ITS stations 311 to 316, pedestrians and/or vehicles (e.g., cars, bicycles, electric scooters and/or motorbikes) not supporting C-ITS.

According to a general definition, an RSU 311 to 313 is a device used in intelligent transportation systems (ITS) for providing communication and infrastructure support for vehicles (i.e., vehicular C-ITS stations) on the road. RSUs are typically installed along the roadside at fixed locations (e.g., at particular road sections and/or junctions) and play a crucial role in enabling vehicle-to-infrastructure (V2I) communication. RSUs serve as a communication gateway between vehicles and the transportation infrastructure. RSUs facilitate the exchange of information and data between vehicles and various entities such as traffic management systems, traffic lights, toll collection systems, and other roadside equipment.

As indicated above, RSUs 311 to 313 are equipped with wireless communication technologies to establish connections with vehicles (namely, vehicular C-ITS stations 314 to 316) and with other RSUs. The most commonly used wireless communication standards for RSUs include Dedicated Short-Range Communications (DSRC) and Cellular Vehicle-to-Everything (C-V2X). These standards enable reliable and low-latency communication between vehicles and RSUs, allowing the exchange of safety messages, traffic information, and other data.

The plurality of RSUs 311 to 313 are responsible for collecting data from vehicles (at least vehicular C-ITS stations and optionally also other vehicles) and sharing it with the transportation infrastructure. This data may comprise, for example, information on vehicle speed, location, acceleration and/or braking of vehicles. For enabling this functionality, each of the plurality of RSUs 311 to 313 comprises or is connected to one or more sensors (e.g., one or more speed sensors and/or one or more acceleration sensors). The plurality of RSUs 311 to 313 may be configured to transmit this data to one or more traffic management centers or control systems, which can analyze it to monitor traffic conditions, detect incidents, optimize signal timings, and make informed decisions to improve traffic flow and safety. The traffic prediction system 320 is one such control system, as will be described below in detail.

The plurality of C-ITS stations 311 to 316 may communicate with each other by exchanging C-ITS messages with each other. These C-ITS messages may also be shared with a C-ITS edge cloud (not shown in Figure 3). These C-ITS messages may comprise, for example, cooperative awareness message (CAMs) and/or decentralized environmental notification message (DENMs).

Examples of functionalities provided by the C-ITS wireless communication system 310 (that is, provided by the associated C-ITS service) may comprise sharing sensor data (e.g., video from the car in front of your own car), sharing control information so as to allow vehicles to drive in close formation, saving road space and exchanging vehicle trajectories to prevent collisions.

Data transmitted within the plurality of C-ITS stations 311 to 316, between the plurality of C-ITS stations 311 to 316 or from and to the plurality of C-ITS stations 311 to 316 may be protected using a security scheme to guarantee confidentiality and integrity of the transmitted data.

Each of the plurality of RSUs 311 to 313 may be configured to implement or host at least one base learner of a distributed ensemble learning approach or scheme (for time series forecasting), as described in connection with Figure 2. Each base learner is configured (i.e., trained) to predict (or forecast) a value of a particular traffic metric of the C-ITS (corresponding to a label of the machine-learning model of the base learner). All of the plurality of base learners associated with the plurality of RSUs 311 to 313 may be configured predict the same (future) value of the same traffic metric though using a different machine-learning model or algorithm. The traffic metric may be, e.g., a traffic flow, a traffic density or an average speed of vehicles. Here, the average speed of vehicles may correspond to average speed of all vehicles or average speed of vehicular C-ITS stations (i.e., vehicles supporting C-ITS). Here, the vehicles may comprise all types of vehicles, all types of motorized vehicles, all types of motorized vehicles travelling (or allowed to travel) on a motorway or only cars. The traffic density may be defined, here and in the following, as the average number of vehicles per lane in a given time window (e.g., *n* vehicles on lane *m* per second). The prediction of each base learner may be based on (the same or different) one or more measured or observed values of one or more input metrics (i.e., one or more features of the machine-learning model of the base learner). The one or more measured or observed values of a given base learner may be obtained by the RSU 311 to 313 associated with the base learner. The one or more input metrics may comprise, e.g., at least one of: a current traffic flow, a current traffic density or a current average speed of vehicles (or vehicular C-ITS stations). In some embodiments, the one or more measured or observed input metrics may comprise at least the traffic metric whose future value is to be predicted.

Each base learner comprised in an RSU of the plurality of RSUs 311 to 313 may be configured to predict a value of the traffic metric of the C-ITS at a location of the RSU (corresponding to a particular road section or road junction). In other words, the value of the traffic metric provided by a base learner of an RSU is specific to the location of the RSU. In these cases, the sensors comprised or connected to the RSU may be assumed to be located at or near the RSU. Alternatively, the value of the traffic metric provided by a base learner of an RSU is specific to an area surrounding the location of the RSU. In these cases, the sensors comprised or connected to the RSU may be assumed to be more spread out (e.g., covering multiple adjacent road junctions and/or a longer road section). In connection with embodiments, the plurality of RSUs 311 to 313 may be adjacent RSUs (e.g., RSUs located in adjacent road junctions and/or adjacent road sections) located in the same general area so that the values of the traffic metric predicted by the base learners of the plurality of RSUs 311 to 313 are (closely) related to each other.

Each base learner comprised in an RSU of the plurality of RSUs 311 to 313 may be trained before and optionally during the deployment of the RSU. The training data may comprise a set of values of the one or more input metrics (i.e., feature or input data) corresponding to a plurality of first time instances and corresponding set of values of the traffic metric (i.e., desired label or output data) corresponding to a plurality of second time instances (being future time instances relative to the plurality of first time instances). Here, the plurality of second time instances correspond to the plurality of first time instances shifted forward in time by a pre-defined amount. The training data may be collected during operation of the C-ITS wireless communication network 310 (e.g., by the RSUs 311 to 313 themselves).

While Figure 3 shows the C-ITS wireless communication network 310 comprising the plurality of RSUs 311 to 313 and the plurality of vehicular C-ITS stations 311 to 313 depicted as being cars, the C-ITS wireless communication network 310 may, in general, comprise one or more vehicular C-ITS stations (being, e.g., cars, trains and/or trams), and/or one or more (stationary) roadside C-ITS stations (i.e., RSUs). Optionally, the C-ITS wireless communication network 310 may also comprise one or more personal C-ITS stations (being, e.g., user devices of pedestrians, cyclists and/or motorcyclists). Thus, C-ITS communication may occur, in general, between vehicles (vehicle-to-vehicle, V2V), between vehicles and road infrastructure (vehicle-to-infrastructure, V2I or I2V), between vehicles and other (vulnerable) road users such as pedestrians, cyclists or motorcyclists (vehicle-to-everything, V2X), and between elements of the road infrastructure (infrastructure-to-infrastructure, I2I), such as traffic lights, cameras, sensors, variable message signs (VMS) and/or traffic information centers (TMC).

The transport network orchestrator 330 is configured to adapt or modify operation of the C-ITS wireless communication network 310. The transport network orchestrator 330 may be at least be able to adjust the amount of network resources (e.g., bandwidth and/or memory) assigned for the plurality of base learners of the plurality of RSUs 311 to 313. These adjustments may be performed, in some cases, based on requests received from the traffic prediction system 320. The transport network orchestrator 330 is communicatively connected to the C-ITS wireless communication network 310 and the traffic prediction system 320.

The traffic prediction system 320 comprises one or more communication buffers 321, a control unit 322, an internal memory 323, one or more internal control and status registers 324, a selection computation unit 325 and a library of algorithms 326. The elements 321 to 326 (all or at least some of which may be logical elements) may be implemented using a computing device or a plurality of computing devices of the traffic prediction system 320.

The one or more communication buffers 321 are configured to store predictions of the base learners and final predictions made by a meta learner of the selection computation unit 325. Moreover, the one or more communication buffers may also be configured to receive, from the transport network orchestrator 330, any requests for modification of one or more operational parameters (e.g., a prediction time limit and/or a correlation lookback period) of the selection computation unit 325 and store said requests. To enable this functionality, the one or more communication buffers 321 are communicatively connected to the plurality of RSUs 311 to 313 and the transportation network orchestrator 330 as well as to the control unit 322.

The control unit 322 is configured to receive predictions from the base learners (i.e., from the RSUs 311 to 313 containing the base learners) via the one or more communication buffers 321, forward said received predictions to the selection computation unit 325 (thus triggering the selection computation unit 325) and communicate with the transportation network orchestrator 330 (e.g., for adjusting the network resource usage of the one or more RSUs 311 to 313). Moreover, the control unit 322 is configured to handle changes that relate to any parameters of the selection computation unit 325 comprising, e.g., the prediction time limit, the correlation lookback value and/or the updates of the library of algorithms 326. The control unit 322 may be a logical unit implementable as a separate hardware component of the traffic prediction system 320 (e.g., a separate processor or computing device) or a logical or software component of the traffic prediction system 320 (executed by at least one processor of the traffic prediction system 320). In the former case, the one or more internal control and status registers 324 or at least some of them may form a part of said separate hardware component.

The internal memory 323 is configured to store information relating to operation of the traffic prediction system 320. Said information may comprise, e.g., correlation time series of arrival times of the predictions received from the base learners at the traffic prediction system 320 (or the selection computation unit 325 thereof) and/or prediction errors of predictions of the base learners.

The one or more internal control and status registers 324 are configured to store control and status information of the traffic prediction system 320. The one or more internal control and status registers 324 are communicatively connected to the control unit 322 and the selection computation unit 325.

The library of algorithms 326 comprises one or more algorithms for building of weighted correlation graphs, forming (or selecting) a final prediction based on base learner predictions and/or allocation of network resources.

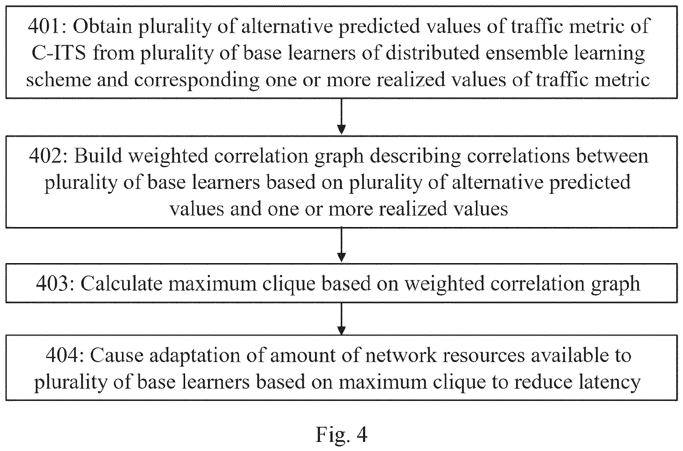

The selection computation unit 325 constitutes a core part of the embodiments. The selection computation unit 325 is configured to implement or host a meta learner of the distributed ensemble learning approach or scheme (for time series forecasting) for forming (or selecting) a final prediction based on predictions received from the base learners (i.e., from the RSUs 311 to 313). The meta learner of the selection computation unit 325 may be configured to select, as the final prediction, the base learner prediction which has the highest accuracy while respecting the prediction time limit maintained in the internal memory 323. Additionally, the selection computation unit 325 is configured to cause or trigger adaptation of network resource usage of the base learners based on base learner predicted values and corresponding realized values (e.g., via the control unit 322, the one or more communication buffers 321 and the transportation network orchestrator 330) to reduce latency. The operation of the selection computing unit 325 is discussed in further detail below in connection with Figures 4, 5, 6A, 6B, 7 and 8.

The selection computation unit 325 may be a logical unit implementable as a separate hardware component of the traffic prediction system 320 (e.g., a separate processor or computing device) or a logical or software component of the traffic prediction system 320 (executed by at least one processor of the traffic prediction system 320). In the former case, the one or more internal control and status registers 324 or at least some of them may form a part of said separate hardware component.

While the control unit 322 and the selection computation unit 325 are illustrated in Figure 3 as two separate units, in some alternative embodiments, the functionalities described in connection with the control unit 322 and the selection computation unit 325 may be carried out by the same unit, e.g., by the same at least one processor of the traffic prediction system 320.

Figure 4 illustrates a process for causing adaptation of base learners of a distributed ensemble learning scheme for reducing latency in the context of C-ITS according to embodiments. The process of Figure 4 may be carried out by the traffic prediction system 320 or specifically by the selection computation unit 325 thereof. The illustrated functionalities may be carried out by one or more physical devices (e.g., one or more servers or other computing devices). In the following, the entity carrying out the process of Figure 3 is called an apparatus for simplicity.

Referring to Figure 4, the apparatus obtains (or collects or accumulates), in block 401, a plurality of alternative predicted values of a traffic metric of a co-operative intelligent transport system (C-ITS) from a plurality of base learners of a distributed ensemble learning scheme for time series forecasting and corresponding one or more realized values of the traffic metric. The plurality of alternative predicted values comprise one or more predicted values per base learner (predicted at respective one or more first time instances) corresponding to the one or more realized values (observed at respective one or more second time instances occurring after the one or more first time instances). In other words, the one or more predicted values per base learner are predictions of the one or more realized values. The plurality of base learners may be comprised in one or more RSUs of the C-ITS or a respective plurality of RSUs. The obtaining in block 401 may occur over a certain length of time before a meta learner of the apparatus is operational (e.g., during a system boot phase of the apparatus). In other words, the predicted and realized values may be obtained in block 401 as they become available (i.e., not all at once). The arrival times of at least the plurality of predicted values of the traffic metric at the apparatus may be differ from each other. The obtained plurality of alternative predicted values of the traffic metric and corresponding one or more realized values of the traffic metric may comprise at least values covering a pre-defined lookback period.

In some embodiments, the plurality of alternative predicted values obtained in block 401 may comprise a plurality of predicted values per base learner (predicted at a respective plurality of first time instances), and the one or more realized values obtained in block 401 may comprise a plurality of realized values (observed at respective plurality of second time instances occurring each after a corresponding one of the plurality of first time instances).

In some embodiments, the traffic metric to be predicted by the plurality of base learners is one of a traffic flow, a traffic density or an average speed of vehicles (all vehicles or just vehicular C-ITS stations). The traffic metric may relate to all (motorized) vehicles, only cars, only C-ITS supporting (motorized) vehicles or only C-ITS supporting cars. Namely, each of the plurality of base learners may be configured to predict values of the traffic metric based on (measured) values of one or more input metrics (i.e., feature metrics) comprising at least one of: a traffic flow, a traffic density or an average speed of vehicles (or vehicular C-ITS stations). The one or more input metrics may be the same for all of the plurality of base learners (though their measured or observed values may be different). In some embodiments, the one or more inputs metrics may comprise at least the traffic metric whose future value is to be predicted. The values of the one or more input metrics may be measured by the plurality of RSUs (e.g., using dedicated sensors) and/or by other C-ITS devices (e.g., other types of C-ITS stations such vehicular C-ITS stations). In the latter case, the values of the one or more input metrics may be communicated to the plurality of RSUs wirelessly. The plurality of RSUs may share their measurement data among each other so that all of the plurality of base learners perform predictions based on the same values of the same one or more input metrics. Alternatively, each RSU may perform predictions based on their own measured values of the one or more input metrics.

In some embodiments, each (or at least some) of the plurality of base learners may be configured to predict values of the traffic metric further based on information (e.g., a map or a graph) on spatial locations of the sensors of the plurality of RSUs associated with the plurality of base learners. Namely, the measurements of the one or more input metrics obtained using sensors of two adjacent RSUs and/or at closely spaced time instances are not independent but dynamically correlated with each other. These spatial-temporal correlations of traffic data (i.e., measured values of the one or more input metrics) may be employed for predicting values of the traffic metric by a given base learner. Here, time correlations in the values of the one or more input metrics (and/or the traffic metric) may be caused by recurring patterns in the behavior of users (i.e., vehicles), e.g., weekly patterns in traffic due to office hours and school hours. Spatial correlations in the values of the one or more input metrics (and/or the traffic metric) may be caused by the fact that the road network is shared by multiple users (i.e., vehicles), physically, in space (e.g., construction work that causes some roads to be closed for traffic impacts traffic in nearby roads and a traffic jam near a school impacts traffic in the proximity of the school). The information on spatial locations of the sensors of the plurality of RSUs associated with the plurality of base learners may be provided in the form of a particular graph, sometimes called a traffic network, where locations of the plurality of RSUs (corresponding to the locations of the sensors of the plurality of RSUs) are nodes of the graph and roads connecting RSUs are edges of the graph. Said nodes are associated with vectors where elements of the vectors capture values of the one or more input metrics (e.g., average speed, traffic density, etc.) measured by the plurality of RSUs. For example, this traffic network may be used as an input data structure denoting input traffic features with ASTGCN-based base learners as described, for example, in Guo, S., Lin, Y., Feng, N., Song, C. and Wan, H. "Attention Based Spatial-Temporal Graph Convolutional Networks for Traffic Flow Forecasting". Proceedings of the AAAI Conference on Artificial Intelligence. 33. 922-929. 10.1609/aaai.v33i01.3301922 (2019).

In some embodiments, each or at least some of the plurality of base learners is configured to predict values of the traffic metric based on the one or more input metrics (i.e., feature metrics) and location information regarding (relative) locations of the plurality of RSUs (or sensors thereof). For example, said location information may be provided in the form of a graph where nodes are RSUs and edges denote roads connecting the RSUs.

The apparatus builds, in block 402, a weighted correlation graph describing correlations between the plurality of base learners based on the plurality of alternative predicted values of the traffic metric and the one or more realized values of the traffic metric. The weighted correlation graph comprises a plurality of nodes connected via a plurality of edges. The plurality of nodes of the weighted correlation graph correspond, respectively, to the plurality of base learners and are associated with a respective plurality of first weights defined based on values of a pre-defined prediction error metric defined based on the plurality of alternative predicted values and the one or more realized values. In other words, a given node in the weighted correlation graph is weighted based on a value of the prediction error (or accuracy) metric for the given base learner relating to the latest prediction of said base learner. The weighting may be performed so that nodes associated with high prediction accuracy or equally low prediction error are assigned larger weights compared to nodes associated with low prediction accuracy or equally high prediction error. The pre-defined prediction error metric may be, for example, mean absolute percentage error (MAPE), mean percentage error (MPE), mean absolute error (MAE) or root mean squared error (RMSE).

The plurality of edges between the plurality of nodes in the weighted correlation graph are associated with second weights defined based on values of a correlation coefficient calculated for arrival times of the plurality of alternative predicted values at the apparatus. In other words, a given edge of the weighted correlation graph between a first node and a second node is weighted with a correlation coefficient calculated between the arrival times of predictions (forecasts) of first and second base learners associated, respectively, with the first and second nodes. The correlation coefficient may be, for example, a Pearson correlation coefficient. The correlation coefficient may be calculated over a (correlation) lookback period (e.g., 100 ms). The lookback period may be dynamically adjustable by the apparatus (i.e., by the selection computation unit) and/or by a transport network orchestrator. The arrival times of the plurality of alternative predicted values at the apparatus may be given in the form of a time series. This time series may be stored in a memory of the apparatus (as described in connection with Figure 3).

The apparatus calculates, in block 403, a maximum (or equally maximal) clique based on the weighted correlation graph. According to a general definition, a maximum clique" is the largest complete subgraph within a given graph (here, the weighted correlation graph). A complete subgraph (equally called a clique) is a subset of nodes in which every pair of distinct nodes is connected by an edge. Therefore, a maximum clique is the largest possible subset of nodes in which every pair of nodes is connected. In the context of embodiments, the maximum clique is subgraph of the weighted correlation graph defining a set of base learners which provided predictions with the highest prediction accuracy (i.e., lowest prediction error). Thus, the final prediction is to be selected from predictions of base learners belonging to the maximum clique

The maximum clique may be computed using any known maximum clique calculation algorithm such as the algorithm described in Boppana, R., and Halldorsson, M. M. "Approximating maximum independent sets by excluding subgraphs". BIT Numerical Mathematics, 32(2), pp. 180-196 (1992).

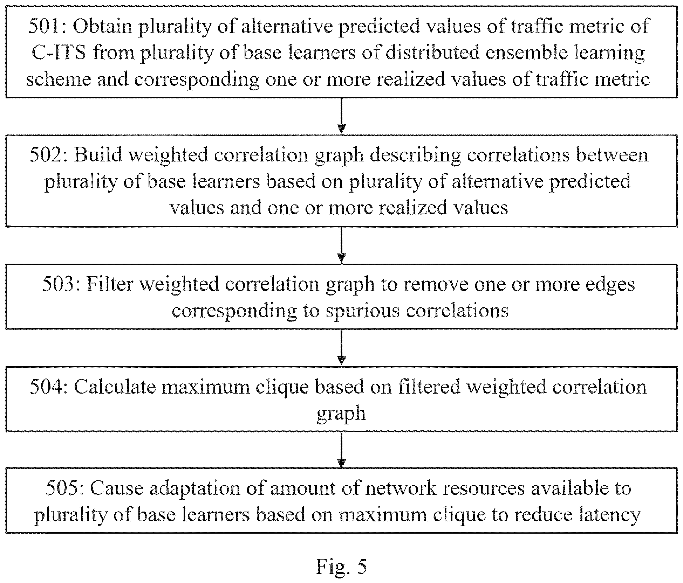

In some embodiments, the weighted correlation graph may be filtered before or as a part of the calculating of the maximum clique in block 403, as will be described in detail in connection with Figure 5.

The apparatus causes or triggers, in block 404, adaptation of amount of network resources available to the plurality of base learners based at least on the maximum clique to reduce latency. In some embodiments, the adaptation may be based on, in addition to the maximum clique, the weighted correlation graph and/or the filtered weighted correlation graph. The network resources to be adapted may comprise frequency bandwidth and/or memory.

The adaptation may be caused or triggered in block 404 by transmitting, to a (transport) network orchestrator, a request for performing the adaptation. Here, the request may comprise information needed for performing the adaptation. Said information may comprise the maximum clique, the weighted correlation graph excluding the maximum clique or both the maximum clique and the weighted correlation graph. In some embodiments, said information may explicitly define the network resource allocations per base learner determined based on the maximum clique.

In some embodiments, the adaptation of the network resources may comprise assigning a higher portion of the available network resources to base learners comprised in the maximum clique compared to base learners not comprised in maximum clique. Additionally or alternatively, the adaptation of the network resources may comprise assigning a lower portion of the available network resources to base learners not comprised in the maximum clique compared to base learners comprised in maximum clique.

In some embodiments, the adaptation of the network resources may comprise assigning network resources to base learners comprised in the maximum clique based on prediction accuracy. Specifically, the adaptation of the network resources may comprise assigning network resources to base learners comprised in the maximum clique such that the amount of network resources assigned to a given base learner is defined to increase as an accuracy of a (latest) predicted value of said base learner is increases. In other words, the network resources are assigned to base learners in the maximum clique ranked in decreasing order of their accuracy. For example, the amount of network resources assigned to a given base learner may be defined to be directly proportional to an accuracy of a (latest) predicted value of said base learner. In practice, the apparatus may access a look-up table indexed by base learners' identifiers and retrieve, from said look-up table, a number corresponding to the portion of resources to allocate.

The process of Figure 4 may be repeated periodically or regularly. Alternatively, the actions described in connection with blocks 401 to 403 may be repeated periodically according to a first pre-defined period while the action described in connection with block 404 may be carried out every Nth time the maximum clique is updated (by performing actions pertaining to blocks 401 to 403), where *N* may be a positive integer larger than one. In other words, the amount of network resources available to each of the plurality of base learners may not necessarily be updated or adapted every time the maximum clique is updated. Additionally or alternatively, in some embodiments, the process of Figure 4 may be performed in parallel for a plurality of different traffic metrics (e.g., for two or more of a traffic flow, a traffic density or an average speed of vehicles).

Figure 5 illustrates another process for causing adaptation of base learners of a distributed ensemble learning scheme for reducing latency in the context of C-ITS according to embodiments. The process of Figure 5 may be carried out by the traffic prediction system 320 or specifically by the selection computation unit 325 thereof. The illustrated functionalities may be carried out by one or more physical devices (e.g., one or more servers or other computing devices). In the following, the entity carrying out the process of Figure 5 is called an apparatus for simplicity.

The process of Figure 5 corresponds to a variation of the process of Figure 4. Any of the definitions provided in connection with Figure 4 may apply, *mutatis mutandis,* also for Figure 5.

The initial actions pertaining to blocks 501, 502 of Figure 5 may correspond fully to actions described above in connection with blocks 401, 402 of Figure 4 and are, thus, not discussed here for brevity.

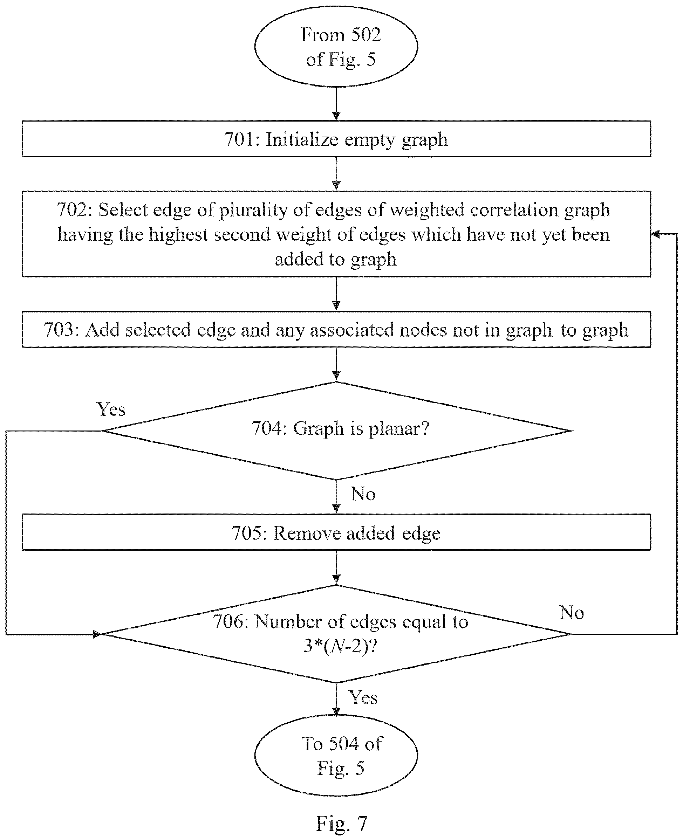

The process of Figure 5 differs from the process of Figure 4 in that, following the building of the weighted correlation graph in block 502, the apparatus filters, in block 503, the weighted correlation graph to remove one or more edges corresponding to spurious correlations. The filtering may be performed so that the filtered weighted correlation graph corresponds to a planar maximally filtered graph (PMFG). According to a general definition, a planar graph is a graph which can be drawn on a flat surface without the edges crossing each other while a PMFG is a planar graph where the edges connecting the most similar (i.e., most highly correlated) nodes are added first when building the planar graph. An exemplary method for forming a PMFG is discussed below in connection with Figure 7.

The apparatus calculates, in block 504, a maximum clique based on the filtered weighted correlation graph. As the filtered weighted correlation graph (being e.g., a PMFG) is typically a relatively small graph, one of well-known brute force approaches may be used for calculating the maximum clique by systematically checking all subgraphs of the filtered weighted correlation graph for completeness.

The apparatus causes or triggers, in block 505, adaptation of amount of network resources available to the plurality of base learners based at least on the maximum clique to reduce latency, as described in connection with block 404 of Figure 4.

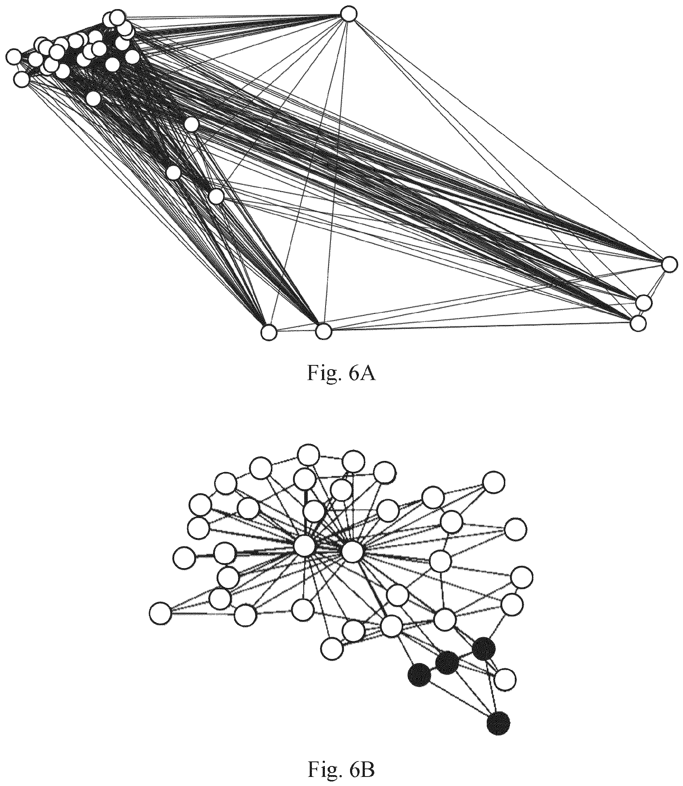

Figures 6A and 6B provide an example of a weighted correlation graph and a corresponding planar maximally filtered graph, respectively. The nodes of the weighted correlation graph in Figures 6A and 6B are illustrated with circles while the edges of the weighted correlation graph are shown with lines connecting the circles. As can be observed from Figure 6A, in the weighted correlation graph, each node is connected via an edge to each other node which results in a rather complicated graph. The weighted correlation graph comprises altogether 38 nodes and 679 edges. In contrast, the corresponding planar maximally filtered graph in Figure 6B is noticeably less complex in terms of number of edges (containing only 108 edges) and thus evaluating the maximum clique is considerably less computationally demanding. Said maximum clique calculated for the planar maximally filtered graph is shown in Figure 6B using filled black circles.

Figure 7 illustrate one example of a method for forming a planar maximally filtered graph (PMFG) which may be used in some embodiments. Namely, the illustrated process corresponds to one more detailed implementation of block 503 of Figure 5 (i.e., the filtering step). Thus, the process of Figure 7 may be carried out by the traffic prediction system 320 or specifically by the selection computation unit 325 thereof. The illustrated functionalities may be carried out by one or more physical devices (e.g., one or more servers or other computing devices). In the following, the entity carrying out the process of Figure 7 is called an apparatus for simplicity.

Following the building of the weighted correlating graph in block 502, the apparatus performs actions pertaining to blocks 701 to 706 for filtering the weighted correlating graph so as to form a PMFG. Initially, the apparatus initializes, in block 701, an empty graph. Then, the apparatus selects, in block 702, an edge of the plurality of edges of the weighted correlation graph having the highest second weight among edges which have not yet been added to the graph. Here, the expression "edges which have not yet been added to the graph" encompasses both edges which have been added and are currently included in the graph as well as edges which have been added to graph and subsequently removed from the graph. Having a high second weight for an edge between two nodes implies that predictions from two base learners associated with said two nodes are expected to arrive, at the apparatus, substantially at the same time. The apparatus adds, in block 703, the selected edge to the graph. Moreover, the apparatus adds, in block 703, any nodes connected to the edge to the graph if they are not already included in the graph.

After the adding of the selected edge to the graph, the apparatus determines, in block 704, whether the graph is planar (i.e., whether it can be drawn to a flat surface without the edges crossing each other). In other words, the apparatus determines whether the newly added edge has made the previously planar graph non-planar. In response to the graph not being planar in block 704, the apparatus removes, in block 705, at least the edge which was previously added in block 703.

Following the removing of the edge in block 705 or determining that the graph is still planar in block 704, the apparatus determines, in block 706, whether the number of edges in the graph is equal to *3(N* - 2), where *N* is a positive integer equal to a number of nodes in the weighted correlation graph.

In response to the number of edges in the graph not being equal to 3(*N* - 2) in block 706, the apparatus repeats actions relating to blocks 701 to 706 for the next edge (i.e., the edge having the next highest second weight). This process is repeated until the apparatus determines, in block 706, the number of edges in the graph are equal to 3(*N* - 2). Once this is true, the PMFG is considered finished and thus the apparatus may proceed to calculating the maximum clique based on it in block 504 of Figure 5. In some embodiments, the apparatus may remove any isolated nodes (i.e., nodes not connected to any edges) from the PMFG before proceeding to block 504 of Figure 5.

The example of Figures 6A & 6B employs the process of Figure 7 with *N* being equal to 38.

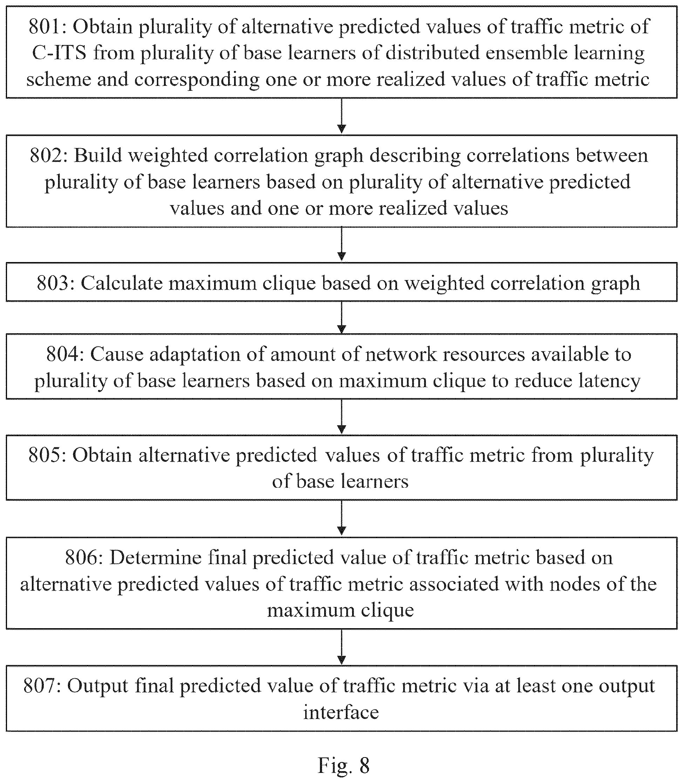

Figure 8 illustrates a process for causing adaptation of base learners of a distributed ensemble learning scheme for reducing latency in the context of C-ITS as well as for making a final prediction according to embodiments. The process of Figure 8 may be carried out by the traffic prediction system 320 or specifically by the selection computation unit 325 thereof. The illustrated functionalities may be carried out by one or more physical devices (e.g., one or more servers or other computing devices). In the following, the entity carrying out the process of Figure 8 is called an apparatus for simplicity.

The initial actions of the process of Figure 8 relating to blocks 801 to 804 may be carried out as described in connection with blocks 401 to 404 Figure 4 and are, thus, not described here for brevity. Any of the features described in connection with embodiments of Figures 5, 6A, 6B and/or 7 may be combined with the process of Figure 8.

Following the causing of adaptation of the amount of network resources available to the plurality of base learners in block 804 (or at least following the calculation of the maximum clique in block 803), the apparatus obtains, in block 805, a plurality of alternative predicted values of the traffic metric from the plurality of base learners, respectively. A single value may be obtained from each base learner. The arrival times of the plurality of alternative predicted values of the traffic metric at the apparatus may differ from each other. As described in connection with previous embodiments, the plurality of base learners may be located, e.g., in one or more RSUs.

The apparatus determines, in block 806, a final predicted value of the traffic metric based on alternative predicted values of the traffic metric obtained from base learners corresponding to nodes of the maximum clique. In other words, the determining of the final predicted value may be based on a subset of the plurality of alternative predicted values, where the subset corresponds to alternative predicted values obtained from base learners corresponding to nodes of the maximum clique. For example, the apparatus may select, as the final prediction, an alternative predicted value which is associated with highest prediction accuracy, i.e., smallest value of the prediction error metric such as MAPE. Alternatively, the apparatus may determine the final prediction based on a plurality (e.g., all or a subset) of the alternative predicted values associated with the maximum clique. For example, the final prediction may be defined to be a mean of the alternative predicted values associated with the maximum clique or a mean of *n* highest-prediction-accuracy (or lowest-prediction-error) alternative predicted values associated with the maximum clique (*n* being a positive integer larger than one and smaller than the number of nodes in the maximum clique). As described in connection with previous embodiments, the prediction error metric may have been evaluated per node of the weighted correlation graph when building the weighted correlation graph (of which the maximum clique is a subgraph).

The apparatus outputs, in block 807, the final predicted value of the traffic metric via at least one output interface. For example, the apparatus may output the final predicted value, e.g., to the (transportation or C-ITS) network orchestrator (i.e., element 330 of Figure 3). Said network orchestrator or other entity receiving the final predicted value may be subsequently use the final predicted value of the traffic metric (e.g., traffic flow, traffic density, average speed of vehicles) for making decision regarding the C-ITS (e.g., regarding one or more vehicular C-ITS stations). For example, the final predicted value (or, in practice, a plurality of predicted values) may be used for a variety of application such as implementing a variable speed limit, traffic anomaly detection or order dispatching (e.g., for a ride-hailing service).

As mentioned above, one relevant application for the predicted values of the traffic metric is implementing variable speed limits. A variable speed limit (VSL) is a traffic management approach that aims to dynamically deploy traffic control agents whose job is to enforce specific speed limit policies on vehicles within a given geographical zone. Variable speed control is an example of a VTR policy that optimizes the mainstream traffic on motorways by adapting the speed limit according to real-time traffic and weather conditions. This is enabled by managing the flow of vehicles entering a bottleneck area (e.g., congested crossroad) by inducing an artificial "controlled" bottleneck using VSL agents upstream of the real bottleneck. This, in turn, allows VSL to limit the inflow rate to the congested area to the approximate value of the optimal road operational capacity as well as preventing traffic flow breakdown and enabling higher throughput through a congested area.

In some embodiments, the actions described in connection with blocks 801 to 805 may be repeated periodically according to a first pre-defined period and the actions described in connection with blocks 806 to 807 may be repeated periodically according to a second pre-defined period. The second pre-defined period may be (much) shorter than the first pre-defined period. In other words, the maximum clique (and the amount of network resources available to each of the plurality of base learners) may be updated only occasionally while the apparatus may be constantly obtaining alternative predicted values of the traffic metric from the plurality of base learners and determining final predictions based thereon and on the current maximum clique.

The embodiments described above provide at least the following advantages:
- Reduction of inference latency for the selection of the final prediction in the meta learner.
- Enabling adaption to real-time network conditions in base learners.

The blocks, related functions, and information exchanges described above by means of Figures 3, 4, 5, 7 and 8 are in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

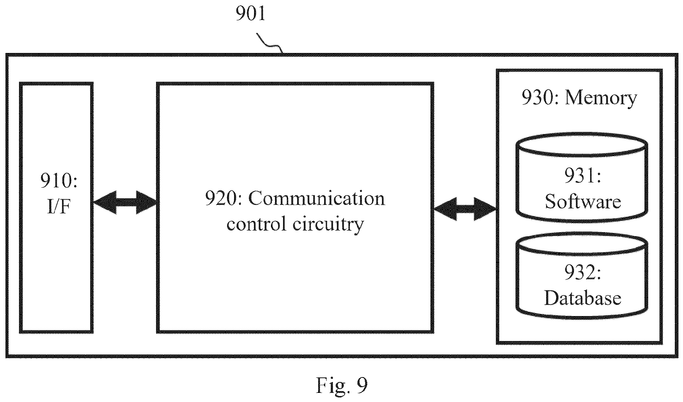

Figure 9 provides an apparatus 901 according to some embodiments. Specifically, Figure 9 may illustrate an apparatus 901 communicatively connected to a network orchestrator of a C-ITS network (and optionally also directly to the C-ITS network). The apparatus 901 may be the traffic prediction system 320 or the selection computation unit 325 of Figure 3.

The apparatus 901 may comprise one or more communication control circuitry 920, such as at least one processor, and at least one memory 930, including one or more algorithms 931 (instructions), such as a computer program code (software) wherein the at least one memory and the computer program code (software) are configured, with the at least one processor, to cause the apparatus 901 to carry out any one of the exemplified functionalities of the apparatus (or the selection computation unit or the traffic prediction system) described above. Said at least one memory 930 may also comprise at least one database 932.

When the one or more communication control circuitry 920 comprises more than one processor, the apparatus 901 may be a distributed device wherein processing of tasks takes place in more than one physical unit. Each of the at least one processor may comprise one or more processor cores. A processing core may comprise, for example, a Cortex-A8 processing core manufactured by ARM Holdings or a Zen processing core designed by Advanced Micro Devices Corporation. The one or more communication control circuitry 920 may comprise at least one Qualcomm Snapdragon and/or Intel Atom processor. The one or more communication control circuitry 920 may comprise at least one application-specific integrated circuit (ASIC). The one or more control circuitry 920 may comprise at least one field-programmable gate array (FPGA).

Referring to Figure 9, the one or more communication control circuitry 920 of the apparatus 901 are configured to carry out functionalities of the apparatus described above by means of any of Figures 2 to 5, 6A, 6B, 7 and 8 using one or more individual circuitries. It is also feasible to use specific integrated circuits, such as ASIC (Application Specific Integrated Circuit) or other components and devices for implementing the functionalities in accordance with different embodiments.

Referring to Figure 9, the apparatus 901 may further comprise different interfaces (I/F) 910 such as one or more communication interfaces comprising hardware and/or software for realizing communication connectivity according to one or more communication protocols. The one or more communication interfaces 910 may comprise, for example, at least one communication interface between the apparatus 901 and a (transportation or C-ITS) network orchestrator and/or the apparatus 901 and a C-ITS wireless communication network or system. The one or more communication interfaces 910 may comprise, for example, at least one communication interface between the apparatus 901 and one or more C-ITS stations (comprising one or more vehicular C-ITS stations and/or one or more roadside C-ITS stations).

In some embodiments, the one or more communication interfaces 910 may comprise at least one communication interface between the apparatus 901 and a (transportation or C-ITS) network orchestrator and the apparatus 901 and a C-ITS wireless communication network (or system).

The one or more communication interfaces 910 may comprise standard well-known components such as an amplifier, filter, frequency-converter, (de)modulator, and encoder/decoder circuitries, controlled by the corresponding controlling units, and one or more antennas. The apparatus 901 may also comprise one or more user interfaces.

Referring to Figure 9, the memory 930 may be implemented using any suitable data storage technology, such as semiconductor-based memory devices, flash memory, magnetic memory devices and systems, optical memory devices and systems, fixed memory and removable memory.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware.

In an embodiment, at least some of the processes described in connection with Figures 2 to 5, 6A, 6B, 7 and 8 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, filter (low-pass, high-pass, bandpass and/or bandstop), sensor, circuitry, inverter, capacitor, inductor, resistor, operational amplifier, diode and transistor. In an embodiment, the at least one processor, the memory, and the computer program code form processing means or comprises one or more computer program code portions for carrying out one or more operations according to any one of the embodiments of Figures 2 to 5, 6A, 6B, 7 and 8 or operations thereof. In some embodiments, at least some of the processes may be implemented using discrete components.

According to an embodiment, there is provided an apparatus comprising means for performing:
obtaining a plurality of alternative predicted values of a traffic metric of a co-operative intelligent transport system, C-ITS, from a plurality of base learners of a distributed ensemble learning scheme and corresponding one or more realized values of the traffic metric, wherein the plurality of alternative predicted values comprise one or more predicted values per base learner corresponding to the one or more realized values;
building a weighted correlation graph describing correlations between the plurality of base learners based on the plurality of alternative predicted values and the one or more realized values, wherein
   - a plurality of nodes of the weighted correlation graph correspond, respectively, to the plurality of base learners and are associated with first weights defined based on values of a pre-defined error metric defined based on the plurality of alternative predicted values and the one or more realized values and
   - a plurality of edges between the plurality of nodes in the weighted correlation graph are associated with second weights defined based on values of a correlation coefficient calculated for arrival times of the plurality of alternative predicted values at the apparatus;
calculating a maximum clique based on the weighted correlation graph; and
causing adaptation of amount of network resources available to the plurality of base learners based on the maximum clique to reduce latency.

Embodiments as described may also be carried out, fully or at least in part, in the form of a computer process defined by a computer program or portions thereof. Embodiments of the methods described in connection with any of Figures 2 to 5, 6A, 6B, 7 and 8 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

The term "non-transitory", as used herein, is a limitation of the medium itself (that is, tangible, not a signal) as opposed to a limitation on data storage persistency (for example, RAM vs. ROM).

Reference throughout this specification to one embodiment or an embodiment means that a particular feature, structure, or characteristic described in connection with the embodiment is included in at least one embodiment of the present solution. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present solution may be referred to herein along with alternatives for the various components thereof. It is understood that such embodiments, examples, and alternatives are not to be construed as de facto equivalents of one another, but are to be considered as separate and autonomous representations of the present solution.

Even though embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

### INDUSTRIAL APPLICABILITY

At least some embodiments find industrial application in wireless communications.

## Claims

1. An apparatus comprising:
at least one processor; and
at least one memory storing instructions that, when executed by the at least one processor, cause the apparatus at least to perform:
obtaining a plurality of alternative predicted values of a traffic metric of a co-operative intelligent transport system, C-ITS, from a plurality of base learners of a distributed ensemble learning scheme and corresponding one or more realized values of the traffic metric, wherein the plurality of alternative predicted values comprise one or more predicted values per base learner corresponding to the one or more realized values;
building a weighted correlation graph describing correlations between the plurality of base learners based on the plurality of alternative predicted values and the one or more realized values, wherein
- a plurality of nodes of the weighted correlation graph correspond, respectively, to the plurality of base learners and are associated with first weights defined based on values of a pre-defined error metric defined based on the plurality of alternative predicted values and the one or more realized values and
- a plurality of edges between the plurality of nodes in the weighted correlation graph are associated with second weights defined based on values of a correlation coefficient calculated for arrival times of the plurality of alternative predicted values at the apparatus;
calculating a maximum clique based on the weighted correlation graph; and
causing adaptation of amount of network resources available to the plurality of base learners based on the maximum clique to reduce latency.

2. The apparatus according to any preceding claim, wherein the traffic metric is one of a traffic flow, a traffic density or an average speed of vehicles, and each of the base learners is configured to predict values of the traffic metric based on one or more measured values of one or more input metrics comprising at least one of: a traffic flow, a traffic density or an average speed of vehicles.

3. The apparatus according to any preceding claim, wherein the plurality of base learners are comprised in one or more road side units of the C-ITS or in a respective plurality of road side unit of the C-ITS.

4. The apparatus according to any preceding claim, wherein the at least one memory and the instructions are configured, with the at least one processor, to cause the apparatus to perform, following the building:
obtaining an alternative predicted value of the traffic metric from each of the plurality of base learners;
determining a final predicted value of the traffic metric based on alternative predicted values of the traffic metric obtained from base learners corresponding to nodes of the maximum clique; and
outputting the final predicted value of the traffic metric via at least one output interface.

5. The apparatus of claim 4, wherein the determining of the final prediction comprises:
determining the final predicted value to be an alternative predicted value of a node of the maximum clique having the lowest value of the pre-defined prediction error metric; or
determining the final predicted value based on a combination of a pre-defined number of alternative predicted values of nodes of the maximum clique having the lowest value of the pre-defined prediction error metric.

6. The apparatus according to any preceding claim, wherein the pre-defined prediction error metric is a mean absolute percentage error.

7. The apparatus according to any preceding claim, wherein the calculating of the maximum clique based on the weighted correlation graph comprises:
filtering the weighted correlation graph to remove one or more edges corresponding to spurious correlations; and
calculating the maximum clique based on the filtered weighted correlation graph.

8. The apparatus of claim 7, wherein the filtering is performed so that the filtered weighted correlation graph is a planar maximally filtered graph.

9. The apparatus of claim 8, wherein the filtering comprises:
1) initializing an empty graph;
2) selecting an edge of the plurality of edges of the weighted correlation graph having the highest second weight of edges which have not yet been added to the graph;
3) adding the selected edge and any associated nodes not already included in the graph to the graph;
4) determining whether the graph is planar;
5) in response to the graph not being planar, removing the edge;
6) repeating steps 2) to 5) until a number of edges in the graph is determined to be equal to *3(N* - 2) so as to form the planar maximally filtered graph, wherein Nis a positive integer equal to a number of nodes in the weighted correlation graph.

10. The apparatus according to any preceding claim, wherein the causing of the adaptation of the amount of network resources available to the plurality of base learners based on the maximum clique comprises:
transmitting, to a network orchestrator, a request for performing the adaptation, wherein the request comprises the maximum clique, the weighted correlation graph excluding the maximum clique or both the maximum clique and the weighted correlation graph.

11. The apparatus according to any preceding claim, wherein the adaptation comprises:
assigning a higher portion of the available network resources to base learners comprised in the maximum clique compared to base learners not comprised in maximum clique; and/or
assigning a lower portion of the available network resources to base learners not comprised in the maximum clique compared to base learners comprised in maximum clique.

12. The apparatus according to any preceding claim, wherein the adaptation comprises:
assigning network resources to base learners comprised in the maximum clique such that the amount of network resources assigned to a base learner is directly proportional to an accuracy of a predicted value of said base learner.

13. The apparatus of claim 11 or 12, wherein the network resources comprise frequency bandwidth and/or memory.

14. The apparatus according to any preceding claim, wherein the plurality of alternative predicted values of the traffic metric and the corresponding one or more realized values of the traffic metric correspond to a pre-defined lookback period.

15. The apparatus according to any preceding claim, wherein the plurality of base learners comprise machine-learning models of a plurality of different types.
